# EUROPEAN PATENT APPLICATION

(11) **EP 2 713 076 A1**
(43) Date of publication of application: **02.04.2014**
(21) Application number: 13185804.5
(22) Date of filing: 24.09.2013
(51) Int. Cl.: F16D 67/00, E06B 9/82, H02K 7/102, F16D 125/38, F16D 127/10, F16D 127/00

(54) **Bidirectional brake**

(30) Priority: 26.09.2012 IT TV20120183
(71) Applicant: Nice Spa, 31046 Oderzo (TV) (IT)
(72) Inventor: Basutto, Federico, 31046 Oderzo (TV) (IT)
(74) Representative: Citron, Massimiliano

(57) **Abstract**

A drive operator is described for moving a movable barrier, comprising an electric motor (10) with a rotatable shaft (20) about an axis (X) and coaxially coupled to a first rotatable disc (60), and - a second disc (90) coaxial to the first that from it can receive rotary motion to be transmitted to the barrier.

To improve the torque transfer and simplify the structure the first and second disc comprise mutually facing surfaces on each of which there is present a plane (64, 92) inclined relative to a plane perpendicular to said axis, the inclined plane of a disc being shaped to push along said axis the inclined plane of the other disc following a rotation.

## Description

The invention relates in general to a drive operator, e.g. of electromechanical type, wherein there is a brake. In particular, the invention applies to a tubular electric gearmotor for moving barriers, here taken as an example. As other examples of barriers we cite sliding or swing gates, doors and garage doors, blinds, curtains or shutters in general, automatic doors.

The gearmotors for movable barriers are commonly equipped with brakes which must ensure the maintenance of the static position of the barrier when it is still. It is essential for safety reasons that the barrier will remain in its position without uncontrolled movements not to result in harm to users.

A well-known brake system for motor is described in EP1324466.

When the motor is idle a spring (6) presses together to form a pack a guide disc (1), fixed to a driving shaft (8), a brake disc (2) free to slide axially without rotating and a disc (3) integral with a driven shaft (7). The pack of the three discs (1) (2) and (3) is compressed by a spring that locks them to each another. When the motor is active the driving shaft (8) and the pin (5) rotate, and the pin (5) slides on the inclined planes of a bushing (4) imposing to it an axial movement that separates the discs and allowing the disc (1) to drive the driven disc (3) by means of pins (12).

The disadvantages of EP1324466 are mainly that:
- the brake disc (2) blocks the driven disc (3) only thanks to the thrust of the spring (6), whose strength is limited and the disc (3) can slip if a certain load is exceeded;
- when applying a torque to the driven shaft (7) (for example, a thief that attempts to force/lift a roller shutter or shutter) greater than that generated by the spring (6), the discs (1) (2) (3) slip and it is possible to open the shutter or barrier. To avoid this, it is needed to use springs and components able to guarantee very high loads with considerable impact on costs.

US3667578 shows a bi-directional brake used for opening or closing valves. It involves the use of balls to impart to discs the longitudinal/axial movement necessary to achieve the braking action. The system is not useful in electric gearmotors of the type in question because the available space is very different and the forces at play are not comparable. In particular, the space available for housing the different components is small, thus the construction of the balls and their inclined planes is problematic, so much as to require the use of noble materials, very resistant and expensive, and difficult to work (e.g. metals). In fact the surfaces interacting between each other should be very small and curved, and at the contact points there would be very high pressure points that easily compromise the integrity thereof, thereby risking to damage and disable the brake.

Then it is desired to improve this state of the art in particular by producing an operator of the above type which is simple to manufacture but effective and/or compatible for cost and size to its market segment.

This can be achieved by a drive operator according to Claim 1, i.e. comprising:
an electric motor with a rotatable shaft about an axis and coaxially coupled to a
   - first rotatable disc, and
   - a second disc coaxial to the first that from it can receive rotary motion to be transmitted to the barrier,
wherein the first and second disc comprise mutually facing surfaces on each of which there is present a plane inclined relative to a plane perpendicular to said axis, the inclined plane of a disc being shaped to push along said axis the inclined plane of the other disc following a rotation.

The presence of one or more inclined planes or ramps on adjacent discs is advantageous because the coupling so produced allow the simultaneous transmission of axial translation and rotary motion. The mechanism is particularly beneficial for its small size and reliability due to the absence of balls or sliding plugs as in EP1324466. The mutual engagement between the inclined planes creates a larger contact surface with the possibility to use less expensive materials (e.g. plastic) and to distribute more uniformly the stesses, thereby extending the operational life of the components of the brake.

Note that there are many configurations relating to the first and/or second disc with respect to the shaft. E.g. they can be both, or only one of the two, rotationally integral with said shaft but free to slide axially with respect to it (via e.g. prismatic pairs). Or the first disc can be integral with said shaft and the second integral with a second shaft adapted to transfer torque to the barrier. The first system is more compact, and the second allows easily to carry out a mechanism similar to a clutch.

According to a preferred embodiment, the first and second disc can transmit rotational movement to each other by direct contact of their inclined planes (maximum compactness and simplicity), or there can be between them a third body, e.g. a rubber shock absorber or an element with low wear and/or able to disperse the heat generated on the inclined planes.

The third body for maximum compactness and compatibility with the rest can be a third disc which is interposed between, and coaxial with, the other two, and is adapted to transfer rotational movement from the first to the second disc. This third disc can integrate the functions described above and/or add new ones.

In particular, it is preferred that the third disc is axially movable between and relative to the other two discs.

The third disc gives the device at least two different working configurations (or a degree of freedom), corresponding to different axial positions of its. By exploiting them properly one can increase the braking force and/or the functionality of the brake.

Preferably, the third disc comprises two faces each facing respectively the first and second disc, each face comprising at least one inclined plane shaped for coupling with and transmit and/or receive motion from the inclined plane of the adjacent disc. In fact, the inclined planes can be exploited to operate the third disc, with the advantages already described and/or also to take advantage of an external resistant torque transmitted on it.

The axial displacement of the third disc, or of one of the discs, can be exploited e.g. as a system of measurement of stresses or working condition or to improve its grip in the braking configuration, see Claim 7.

There can be an elastic element adapted to push the third disc or at least one of the discs toward the braking element. It serves both to ensure a minimum thrust force on the third disc or on at least one of the discs, and to increase the reactivity of the brake thereby causing an instantaneous jerk of the third disc, or of at least one of the discs, toward the braking element.

The elastic element can be mounted in different positions inside the drive operator, e.g. arranged between the third disc and one of the other two (compactness of size and speed of response) and/or between the third disc and the casing of the operator.

A radial symmetry allows to compensate the wringing torques imparted on the brake components. Therefore, the operator can comprise a plurality of said planes arranged on at least one disc with radial symmetry with respect to said axis.

Further advantageous variants are contained in the dependent claims.

The following description relates to a preferred embodiment of a brake for drive operators and will highlight its advantages, making reference to the accompanying drawing in which:

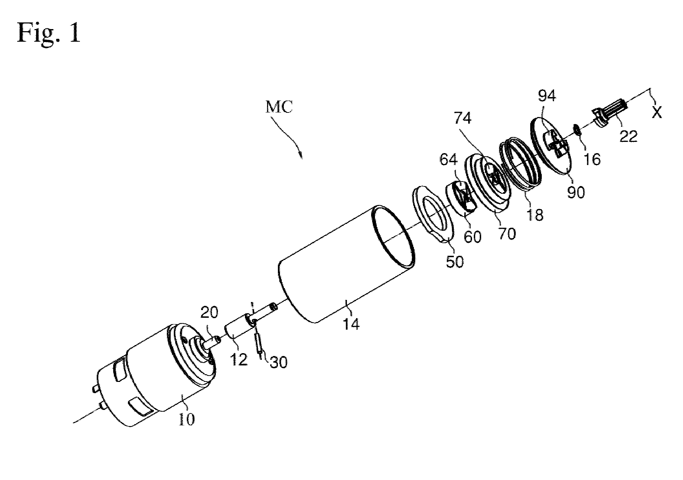

Fig. 1 shows an exploded view of the brake;

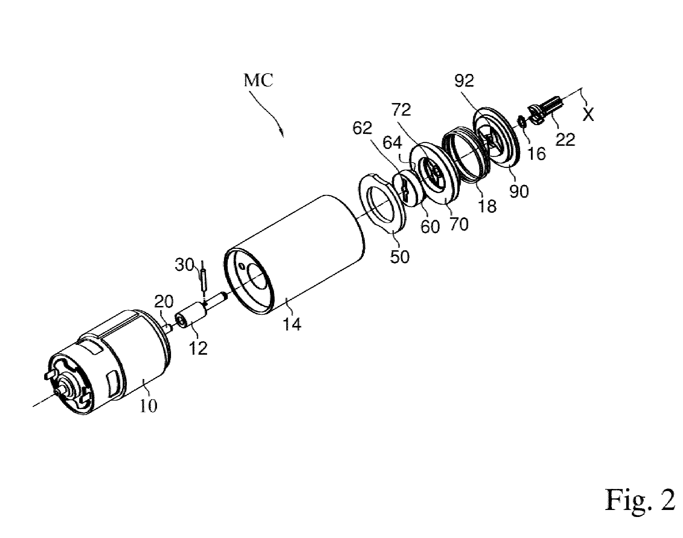

Fig. 2 shows an exploded view from a different angle of the brake;
Fig. 3 shows a longitudinal section view of the brake in braking configuration;
Fig. 4 shows a longitudinal section view of the brake in not-braking configuration;
Figures 5-6 show two perspective views of a first component of the brake (first disc);
Figures 7-8 show two perspective views of a second component of the brake (second disc);
Figures 9-10 show two perspective views of a third component of the brake (third disc),
Fig. 11 shows a vertical sectional view of a variant of the brake.

In the figures there is shown a part of an electric gearmotor of the tubular type having a brake MC. The braking part is positioned downstream of an electric motor 10 that generates the rotary motion to move a movable barrier (not shown) and is transmitted to a mechanical reducer (not shown), e.g. of epicyclic type, through a splined output pin 22.

Usually the mechanical reducer moves a barrier through a pulley, a mechanical arm, a gear or other mechanical transmission devices. While moving the barrier always exerts a variable resistant torque (given by its weight, friction, outdoor weathering agents, etc.) contrary to the movement imposed by the motor 10.

The brake MC, usually part of a tubular drive, is housed inside a cylindrical shell (not shown) of which the longitudinal axis X is indicated.

The motor 10 has an output shaft 20, coaxial with the axis X, on which is keyed a bushing or plug 12 provided with a transverse pivot or pin 30.

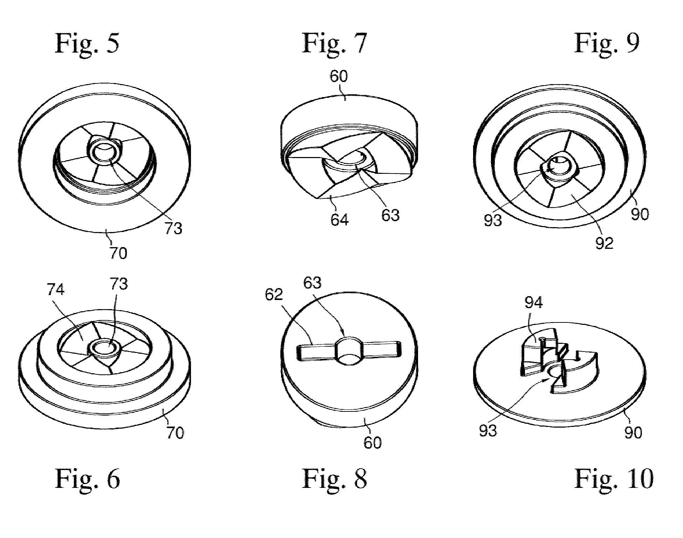

Part of the end of the motor 10 is housed in a hollow cylinder or cap 14, which contains the entire mechanism described below. On the plug 12 is mounted a first disc 60 which has a slot 62 for snugly receiving the pin 30, and a central through-hole 63 (see Figures 7 and 8) to allow the passage of the free end of the pin 12.

Inside the cap 14 and around the disc 60 is fixed (not rotatable) a ring 50 made of a material having a high friction coefficient.

Continuing towards the pin 22, there is, in the order, a second and third disc 70, 90, having a diameter approximately equal (but it can also be different).

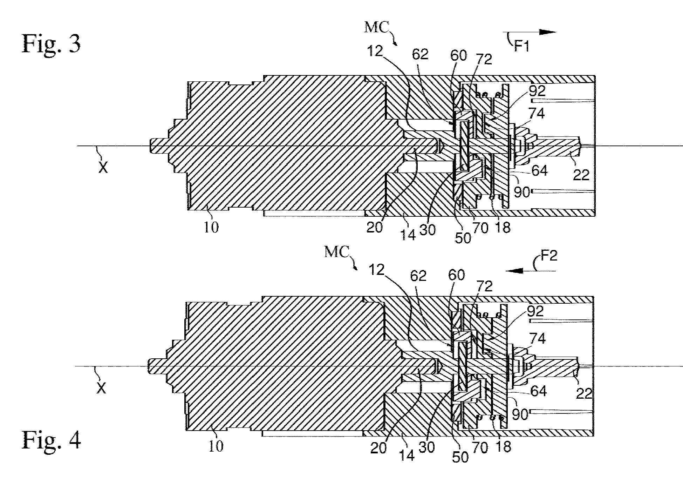

With reference now to the sections of Figure 3 and 4, we can appreciate that the discs 60, 70, 90 are all arranged along the longitudinal axis X and mounted around the pin 12 thanks to their central hole indicated respectively with 63, 73, 93 (see Figures 5-10).

The pin 12 is provided at the free end with a seat in which to secure a segger or a cotter pin 16, with the effect that the disc 90 is rotatable around the pin 12 but axially locked by cotter pin or segger 16.

The disc 60 is integral with the pin 12, through the interlocking of the pin 30 into the slot 62 having a complementary shape. The disc 60 is inserted on the pin 12 and abutted on the pin 30, so it can not move axially towards the electric motor 10.

The disc 70 is not only idle on the pin 12 but it can translate slightly, in both directions, between the two discs 60, 90 along the axis X.

A helical spring 18, located between and around the peripheral edges of the two discs 70, 90, pushes and moves the first against the ring 50, which has about the same diameter.

The disc 70 has on the two faces, facing and in contact with the disc 60 and 90, respectively, a series of inclined planes or ramps 72, 74.

The planes 72 can lay against inclined planes 64 made on the adjacent face of the disc 60, while the planes 74 can lay against the inclined planes 92 made on the adjacent face of the disc 90.

The planes 64, 72, 74, 92 have an inclination relative to a plane orthogonal to the axis X, and are made so as to mate on one another thus ensuring a large contact surface.

Experimentally it was verified that a helical development is the most suitable for the realization of such planes.

### OPERATION

The brake MC has two operating states: active brake (motor 10 stationary, fig. 3) and inactive brake (motor 10 in action, fig. 4).

When the motor 10 rotates the shaft 20, the rotation of the pin 12 entails, by means of the plug 30, the rotation of the first disc 60. The inclined planes 64 of the disc 60 meet and rest against the planes 72 of the disc 70, imposing both its rotation and an axial displacement (the planes 64, 72 slide relatively), towards the pin 22. The disc 70 detaches from the disc 50 winning the opposite force of the spring 18 (see arrow F1) and the opposite resistant torque of the shutter or barrier.

The longitudinal displacement of the disc 70, now set in rotation by the contact with the first disc 60, ends when leaning on the disc 90. The planes 74 first slide slightly above the plane 92 and then, when overlapping and contact have occurred, they transfer the rotary motion to disc 90 which transmits it to the pinion 22. The axial displacement of the second movable disc 70 also involves the compression of the spring 18.

With the motor 10 still there is no torque transmitted to the pin 12 and the pin 22, which receives a resistant torque in the opposite direction from the outside (given e.g. by the weight of a shutter). The resistant torque imposes a reverse rotation to the disc 90 which, through the coupling of the inclined planes or ramps 92 with the planes 74, turns and move axially the movable disc 70 toward the ring 50 until it abuts on it (see arrow F2). The ring 50 prevents the further rotation of the disc 70, which then also locks the barrier.

The braking torque is determined by the friction between the disc 70 and the disc 50, and increases if the force that presses them on each other increases.

Note that the brake MC exploits the external resistant force, transmitted by the pinion 22, to clamp more the disc 70 against the disc 50. The spring 18 does have a pressing effect and thus a braking action, but it is mainly used to decrease the intervention time of the brake and have a faster reaction. There can be situations indeed where the stop position of the roller or barrier corresponds to a very small or absent resistant torque, so the timeliness of the brake is not always guaranteed. The action of the spring guarantees it in any case.

As the motor 10 is still, the more the pinion 22 is forced from the outside to rotate (e.g. if a thief tries to force a shutter by pushing it), the more the disc 90, with the planes 92 pushing on the planes 74, pushes the disc 70 on the disc 50, and the greater the braking force.

The disc 50 in the example is fixed on the cylinder 14 but can be fixed in a suitable seat on the movable disc 70, thereby transferring the friction and braking surface between the disc 50 and an abutment inside the cylinder 14.

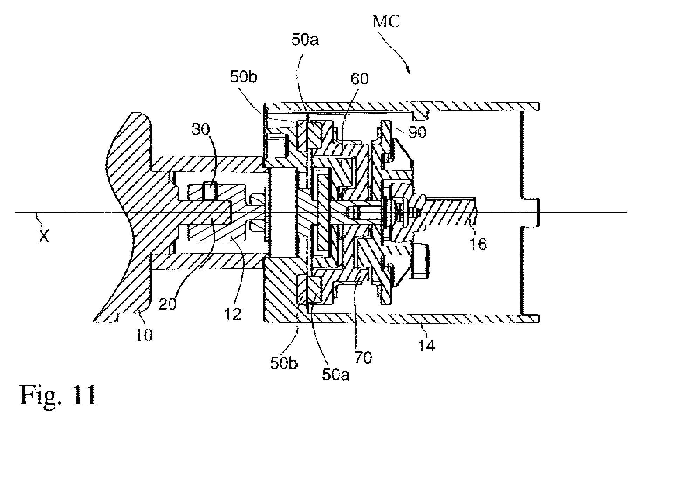

Fig. 11 shows a variant of brake, where equal references are used to indicate components substantially identical to the previous ones, and will not be described further. We will only say that still there are three discs 60, 70, 90 provided with inclined planes and functioning as already described.

The difference lies in the different component having a high friction coefficient. The previous disc 50 is now replaced by two discs 50a, 50b sliding one on another. The disc 50a is integral with the intermediate disc 70, while the disc 50b is integral with the cap 14. The discs 50a, 50b can be selected in a material suitable to generate excellent friction and braking effect. Not only can one choose these materials to give maximum joined efficiency, but the remaining components, especially the disc 70, can be made of different materials to improve other performances. In other words, the degrees of freedom in design are increased, thereby eliminating the constraints imposed by the materials.

## Claims

1. Drive operator for moving a movable barrier, comprising:
an electric motor (10) with a rotatable shaft (20) about an axis (X) and
coaxially coupled to a
- first rotatable disc (60), and
- a second disc (90) coaxial to the first that from it can receive rotary motion to be transmitted to the barrier,
**characterized in that** the first and second disc comprise mutually facing surfaces on each of which there is present a plane (64, 92) inclined relative to a plane perpendicular to said axis, the inclined plane of a disc being shaped to push along said axis the inclined plane of the other disc following a rotation.

2. Drive operator according to claim 1, wherein the first and/or second disc are rotationally integral with said shaft.

3. Drive operator according to claim 1 or 2, wherein the first and second disc are adapted to transmit rotary motion by direct contact of their own inclined planes.

4. Drive operator according to claim 1 or 2, comprising between the first and second disc a third body, e.g. a rubber shock absorber.

5. Drive operator according to claim 1 or 2, comprising between first and second disc an element with low wear and/or able to disperse the heat generated on the inclined planes.

6. Drive operator according to claim 4, wherein the third body comprises a third disc (70) which is interposed between and coaxial with the other two, and is adapted to transfer rotational motion from the first to the second disc.

7. Drive operator according to claim 6, wherein the third disc is movable axially between and relative to the other two discs.

8. Drive operator according to claim 6 or 7, wherein the third disc comprises two faces each facing respectively the first and second disc, each face comprising at least one inclined plane (72, 74) shaped to couple with and receive and/or transmit motion from the inclined plane of the adjacent disc.

9. Drive operator according to any one of the previous claims, comprising a braking element (50) having a high friction coefficient on which at least one of the discs is adapted to abut when axially moving.

10. Drive operator according to claim 9, comprising an elastic element (18) adapted to push at least one of the discs toward the braking element.

11. Drive operator according to claim 6 and 10, wherein the elastic element is disposed between the third disc and one of the other two.

12. Drive operator according to any one of the preceding claims, comprising a plurality of said planes arranged on at least one disc with radial symmetry with respect to said axis.
